(19) Europäisches Patentamt
European Patent Office
Office européen des brevets

(11) Veröffentlichungsnummer: **0 149 051 B1**

# (12) EUROPÄISCHE PATENTSCHRIFT

(45) Veröffentlichungstag der Patentschrift: **26.10.88**

(51) Int. Cl.⁴: **A 01 N 25/02**, A 01 N 25/04, A 01 N 53/00

(21) Anmeldenummer: **84113802.7**

(22) Anmeldetag: **15.11.84**

## (54) Wasserlösliche pestizide Formulierung.

(30) Priorität: 29.11.83 DE 3343092

(43) Veröffentlichungstag der Anmeldung: **24.07.85 Patentblatt 85/30**

(45) Bekanntmachung des Hinweises auf die Patenterteilung: **26.10.88 Patentblatt 88/43**

(84) Benannte Vertragsstaaten: **AT BE CH DE FR GB IT LI NL**

(56) Entgegenhaltungen:
**EP - A - 0 055 401**
**EP - A - 0 062 181**
**FR - A - 2 187 226**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Naik, Arundev H., Walter-Flex-Strasse 20, D-5090 Leverkusen (DE)**
Erfinder: **Sieveking, Hans Ulrich, Dr., Walter-Flex-Strasse 23, D-5090 Leverkusen 1 (DE)**
Erfinder: **Stendel, Wilhelm, Dr., In den Birken 55, D-5600 Wuppertal 1 (DE)**

EP 0 149 051 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wasserlösliche pestizide Formulierungen, die nicht nur selbst klare und stabile Lösungen darstellen, sondern auch nach der Verdünnung mit Wasser klare und stabile Lösungen ergeben. Die Erfindung betrifft ausserdem die Herstellung und die Verwendung dieser Formulierungen.

Die meisten organischen Pestizide sind in Wasser nicht löslich. Sie werden deshalb in organischen Lösungsmitteln gelöst und durch Zugabe von Emulgatoren als emulgierbare Konzentrate formuliert. Bei der Verdünnung mit Wasser entsteht eine weisse Emulsion. Mit flüssigen Pestiziden könnte auf das Lösungsmittel verzichtet werden, wie beispielsweise in der US-PS 4 195 083 beschrieben sind. Die mit Wasser entstehende Emulsion ist aber üblicherweise eine weisse Emulsion mit grober Teilchengrösse.

In den letzten Jahren ist eine neue Richtung in der Formuliertechnik besonders bemerkenswert zu beachten, bei der organische Lösungsmittel durch Wasser ersetzt werden, und zwar um Kosten zu sparen, die Toxizität und Phytotoxizität zu senken, umweltfreundliche Produkte anzubieten und allgemein höhere Sicherheit den Transporteuren und den Verbrauchern zu gewährleisten.

Die DE-OS 3 011 611 betrifft hochviskose (400 cP) Suspensionen, die Verdickungsmittel enthalten. Solche Hilfsmittel können nur die Sedimentation des Wirkstoffes in den Konzentraten verhindern, aber nicht in den Verdünnungen in Wasser, z.B. in Rinderbädern.

In der DE-OS 2 924 878 werden ebenfalls Vedikkungsmittel verwendet. Die Herstellung erfolgt bei 70 °C mit einem hochtourigen (5000 U/min) Mischer.

Die wässrigen Konzentrate der europäischen Patentanmeldung 0 074 329 sind mit Wasser verdünnbar, dabei bilden sich relativ stabile Emulsionen oder Dispersionen.

In der europäischen Patentanmeldung 0 062 181 sind Emulsionen beschrieben, die mit Teilchengrössen von 50 nm bis 100 nm keine klare Lösungen ergeben.

Ausserdem wurden klare Systeme beschrieben, die durch Einsatz von einzelnen nichtionischen Emulgatoren erhalten wurden.

Es wurde nun überraschenderweise gefunden, dass es nicht nötig war, das unpolare Lösungsmittel vollständig zu ersetzen. Im Gegenteil erwies sich ein kleiner Anteil eines solchen Lösungsmittels als sehr günstig. Mit zusätzlichem Einsatz von einem zweiten anionischen Emulgator, konnte der Emulgatorbedarf, besonders für die Pyrethroid-Pestizide, heruntergesetzt werden. Das ermöglichte die Zubereitung von Formulierungen mit höheren Wirkstoffkonzentrationen. In den erfindungsgemässen Konzentrationen liegt der Anteil von unpolaren Lösungsmitteln normalerweise unter dem Wirkstoffanteil.

Gegenstand der Erfindung sind demgemäss wasserlösliche pestizide Formulierungen, bestehend aus 10 bis 500 g/l mindestens eines Pyrethroids, 10 bis 200 g/l eines Gemisches aus aromatischen Kohlenwasserstoffen ($C_{10}$–$C_{13}$) mit Siedepunkten im Bereich von 165–325 °C; 20 bis 500 g/l mindestens eines nichtionischen Emulgators, 5 bis 250 g/l mindestens eines anionischen Emulgators, 0 bis 300 g/l eines Lösungsmittels, dessen Löslichkeit in Wasser 30 bis ∞ g/l beträgt, 0 bis 5 g/l eines Farbstoffes, 0 bis 50 g/l an Hilfsmitteln und 0 bis 900 g/l Wasser.

Die erfindungsgemässen Konzentrate sind in jedem Verhältnis mit Wasser mischbar, wobei klare Lösungen erhalten werden, deren Homogenität und Stabilität entsprechend den Verdünnungen anderen Pestizidkonzentraten überlegen sind. Diese Eigenschaft ist daher sehr bedeutend, wo die Anwendungsbrühe über einen langen Zeitraum hinweg verwendet wird, wie beim Sprühen im Agrarsektor vom Traktor, Flugzeug oder Hubschrauber, bei der Bekämpfung von Insekten im Hygienesektor und beim Sprühen, besonders Dippen der Tiere im Veterinärsektor.

Die Löslichkeit des gegebenenfalls zusätzlichen Lösungsmittels beträgt vorzugsweise 50 bis 300 g/l bei 20 °C, insbesondere jedoch 80 bis 120 g/l bei 20 °C.

Wegen des Einsatzes von oberflächenaktiven Mitteln und hydrophoben Wirkstoffen, werden die klaren Lösungen üblicherweise als Emulsionen betrachtet und als Mikroemulsionen beschrieben.

Die klaren stabilen Lösungen stellen ein solubilisiertes System und zwar eine «Solubilised Solution» dar. Laut Swarbrick (J. Pharm. Sci. 54 (1965) 1229–1237) und Shinoda/Kunieda (J. Colloid and Interface Sci. 42 (1973) 381–387) sollten die thermodynamisch stabilen mizellare Lösungen nicht als Mikroemulsionen bezeichnet werden. Demnach sind solche Lösungen bis zu der Mizellengrösse von 100 nm möglich. Die erfindungsgemässen Formulierungen ergaben in den Anwendungsverdünnungen keine Teilchengrösse über 40 nm.

Die erfindungsgemässen Konzentrate sowie deren stabile Verdünnungen in Wasser (Spraywash, Dipwash etc.) sind ganz einfach herzustellen. Erst werden der Wirkstoff und das unpolare Lösungsmittel mit den Emulgatoren zu einer klaren Lösung zusammengemischt. Mit flüssigen Emulgatoren läuft das Mischverfahren schon bei Raumtemperatur leicht.

Nach Zugabe der notwendigen Menge an Wasser wird mit einem normalen Flügelrührer gemischt, bis eine klare Lösung entsteht. Bei Zugabe von Wasser entsteht eine gelartige Masse erst, wenn das Verhältnis von Wasser zu ‹unpolares Lösungsmittel/Emulgator› etwa 1:1 erreicht hat. Die letzte Mischstufe wird durch Verwendung von warmem (30 °C–40 °C) Wasser, aber auch durch Einsatz von einem kleinen Anteil von polarem Lösungsmittel, das die Gelbildung hemmt, einfacher. Das Herstellungsverfahren ist dann so vereinfacht, dass die Herstellung direkt z.B. in einer Flasche ohne Zusatz von irgendwelchem Gerät erfolgen kann. Die spontane Entstehung der Formulierung mit nur geringem Energieverbrauch ist ein Nachweis dafür, dass das System stabil ist.

Durch Einsatz von unpolarem organischem Lösungsmittel entsteht noch ein weiterer Vorteil, weil der Wirkstoffvorrat als Vorlösung in diesem Lösungsmittel gehalten werden kann. Bei der Herstellung der erfindungsgemässen Formulierung ist es dann nicht mehr nötig, den Wirkstoff, wenn er halbfest bis fest ist, jedes Mal zu schmelzen, da er als Vorlösung schon in fliessfähiger Form verfügbar ist.

Beispiele für erfindungsgemäss einzusetzende Pyrethroide sind:

3-[2-(4-Chlorphenyl)-2-chlorvinyl]-2,2-dimethylcyclopropancarbonsäure[(α-cyano-4-fluor-3-phenoxy)-benzyl]ester (Flumethrin)

α-Cyano-3-phenoxybenzyl(±)-cis, trans-3-(2,2-dibromvinyl)-2,2-dimethylcyclopropancarboxylat (Deltamethrin)

2,2-Dimethyl-3-(2,2-dichlorvinyl)-cyclopropancarbonsäure-α-cyano-3-phenoxybenzylester (Cypermethrin)

3-Phenoxybenzyl(±)-cis, trans-3-(2,2-dichlorvinyl)-2,2-dimethylcyclopropancarboxylat (Permethrin)

α-(p-Cl-phenyl)-isovalerinsäure-α-cyano-3-phenoxybenzylester (Sumizidin)

[Cyano-(3-phenoxyphenyl)-methyl]-3,3-spiro-[cyclo-propan-1,1-(1H)-inden]-2-carboxylat (Cypothrin)

5-Benzyl-3-furylmethyl(±)-cis, trans-chrysanthemat (Resmethrin)

2,2-Dimethyl-3-(2-X-2-methyl-1-propenyl)-cyclopropancarbonsäure-2-Methyl-4-oxo-3-(penta-2,4-dien-1-yl)-cyclopent-2-en-1-yl ester
(Pyrethrin I X = $CH_3$)
Pyrethrin II X = $-CO-O-CH_3$)

Cyano-(4-fluor-3-phenoxyphenyl)-methyl-3-(2,2-di-chlorethenyl)-2,2-dimethyl-cyclopropancarboxylat (Cyfluthrin)

Pentafluorphenyl-methyl-3-(2,2-dichlorethenyl)-2,2-dimethylcyclopropancarboxylat (Fenfluthrin).

Erfindungsgemäss bevorzugt sind die folgenden, organischen unpolaren Lösungsmittel:

| | |
|---|---|
| Solvesso 200 | (Esso Chemie GmbH): hochsiedendes (219–282 °C, DIN 51 751) Lösungsmittel aus vorwiegend (98%) $C_{10}$–$C_{13}$-Aromaten |
| Solvesso 150 | (Esso Chemie GmbH): Siedebereich 186–205 °C, Aromatengehalt (99%) |
| Shellsol A | (Shellchemie): Siedebereich 165–199 °C |
| Shellsol AB | (Shellchemie): Siedebereich 186–210 °C |
| Shellsol RA | (Shellchemie): Siedebereich 178–325 °C |
| Aromasol H | (Imperial Chemical Industries) |

Als Beispiele für die nichtionischen Emulgatoren können folgende genannt werden.

| | | |
|---|---|---|
| Emulgator OX | (Bayer AG): | Alkylpolyglykolether |
| Emulgator 1736 | (Bayer AG): | Alkylpolyglykolether |
| Emulgator 1371 B | (Bayer AG): | Alkylpolyglykolether |
| Emulsogen EL | (Hoechst AG): | Oxyethyliertes Fettsäurederivat |
| Emulgator 368 | (Bayer AG): | Alkylarylpolyglykolether |
| Emulgator 373 | (Bayer AG): | Alkylarylpolyglykolether |
| Emulgator SZZ 1147 A | (Bayer AG): | Alkylarylpolyglykolether |
| Emulgator SZZ 14 | (Bayer AG): | Alkylarylpolyglykolether |
| Emulgator SZZ 1166 B | (Bayer AG): | Alkylarylpolyglykolether |
| Emulgator W | (Bayer AG): | Alkylarylpolyglykolether |
| Arlatone 650 | (Atlas): | Polyoxyethylenrizinusölester |
| Triton x-100 | (Rohm-Haas): | Isooctylphenolpolyethoxyethanol |
| Ninox BM 2 | (Stepan): | Ethoxyliertes Nonylphenol |

Die folgenden gelten als Beispiele für anionische Emulgatoren:

| | | |
|---|---|---|
| Emulgator 1371 A | (Bayer AG): | n-Dodecylbenzolsulfonsäure-calciumsalz, 67% in n-Butanol |
| Phenylsulfonat CA | (Hoechst): | Calciumalkylarylsulfonat, 70% in iso-Butanol |
| Emulgator 110 f | (Bayer AG): | n-Dodecylbenzolsulfonsäure-Mono-ethanolaminsalz |
| Emulgator SZZ 1328 | (Bayer AG): | n-Dodecylbenzolsulfonsäure-Natriumsalz |
| Emulgator SZZ 1328 C | (Bayer AG):: | n-Dodecylbenzolsulfonsäure-Ammoniumsalz |

Als polare Lösungsmittel, deren Löslichkeit in Wasser 30 bis ∞ g/l bei 20 °C beträgt, können folgende eingesetzt werden:

Isopropanol
n-Butanol
Triethylenglykol
Dipropylenglykol
Tripropylenglykol
Polyethylenglykol 200
Diethylglykol-mono-ethyl-ether (Carbitol, Ethyldiglykol)
Dipropylenglykol-mono-methyl-ether
Triethylenglykol-mono-methyl-ether

Die erfindungsgemäss verwendbaren Farbstofftypen sind durch folgende Beispiele erläutert:

Akriflavin, Azorubin S, Indigotin, Kristallviolett, Methylviolett, Patentblau, Rivanol, Tartrazin, etc.

Herstellungsbeispiele

Beispiel 1

25 g Solvesso wurde vorgelegt. 60 g von bei 70 °C verflüssigtem Flumethrin Wirkstoff wurde zugegeben und mit einem normalen Magnetrührer bei 60 °C–70 °C zusammengemischt. Dann wurden unter Rühren bei Raumtemperatur stufenweise 60 g Diethylenglykol-monoethylether, 144 g Emulgator SZZ 14 und 42 g Emulgator 1371 A hinzugefügt. Nach dem Entstehen einer klaren Lösung wurde Wasser bei dem gleichen Rührvorgang bis zum Volumen von 1000 ml zugegeben. Fast spontan war eine klare gelbbraune Lösung entstanden.

Nach der viermonatigen Lagerung erwies sich dieses Konzentrat als physikalisch und chemisch stabil:

| Zeitraum | Aussehen | Gehalt an Wirkstoff |
|---|---|---|
| Anfang | klare, gelbbraune Lösung | 58,6 g/l |
| Nach 4 Monaten bei 30 °C | unverändert | 58,8 g/l |
| bei 40 °C | unverändert | 58,7 g/l |

Die 6%ige Formulierung war in jedem Verhältnis spontan mit Wasser verdünnbar. Bei mehrfacher Verdünnung in Wasser, z.B. 1:2000 (= 30 ppm an Wirkstoffkonzentration) entstand eine farblose, kristallklare, von Wasser ununterscheidbare Lösung.

Diese 1:2000 Verdünnung enthielt eine durchschnittliche Mizellengrösse von 5 nm, gemessen mittels Laserstreulichtkorrelationsspektroskopie.

Das Konzentrat mit der Viskosität von 21 mPs war leicht flüssig. Der Flammpunkt lag über 100 °C.

Beispiel 2

Eine Formulierung wie in Beispiel 1, aber mit Emulgator 368 statt Emulgator SZZ 14 wurde hergestellt.

Die Viskosität betrug 27 mPs.

Die in-vitro Prüfung dieser Formulierung gegen OP-resistente Biarrastämme von Boophilus microplus zeigte eine sehr gute Wirksamkeit. Bei stufenweiser bis zu 60 000facher Verdünnung der Formulierung in Wasser wurden 100%ige Wirksamkeit beobachtet.

Die Teilchengrösse in einer 1:1500 Verdünnung mit Wasser, entsprechend 40 ppm Wirkstoffkonzentration ergab einen durchschnittlichen Wert von 12 nm nach der Methode der Laserstreulichtkorrelationsspektroskopie.

Beispiel 3

In der Formulierung von Beispiel 2 wurden die Emulgatormengen zu ⅔ reduziert. Die neue Formulierung mit 60 g/l Flumethrin, 30 g/l Solvesso 200, 90 g/l Emulgator 368, 30 g/l Emulgator 1371 A und dem Rest Wasser war nach 8 Monaten unverändert klar.

Demnach ist das Wirkstoff:Emulgator-Verhältnis 1:2 möglich geworden. Ohne Zusatz von anionischem Emulgator und unpolarem Lösungsmittel liegt das Verhältnis bei 1:5 oder höher.

Die hier beschriebene Erfindung spart Kosten und ermöglicht höhere Wirkstoffkonzentrationen.

Beispiel 4

Aus der 6%igen Formulierung von Beispiel 3 wurden mit Zugabe von Wasser eine 3%ige Formulierung und eine 2%ige Formulierung hergestellt. Nach 8 Monaten besassen die beiden neuen Formulierungen unveränderte Klarheit.

Die Herstellung von Formulierungen mit niedrigeren Wirkstoffkonzentrationen ist dadurch vereinfacht worden.

Beispiel 5

Eine 18%ige G/G Formulierung wurde durch Einsatz von 180 g/kg Flumethrin, 70 g/kg Solvesso 200, 432 g/kg Emulgator 368, 126 g/kg Emulgator 1371 A, 126 g/kg Diethylenglykolmonoethylether und Restwasser hergestellt.

Die Anwendungskonzentrationen können durch direkte Verdünnung dieser Formulierung mit Wasser hergestellt werden. Für praktische Verdünnungsraten können aber auch Formulierungen mit niedrigeren Wirkstoffkonzentrationen, wie die der Beispiele 1 bis 4, einfach durch Zugabe von Wasser hergestellt werden. Die Teilchengrösse einer 1:1000 Verdünnung mit Wasser betrug 7 nm.

Beispiel 6

Eine Formulierung aus 150 g/l Flumethrin, 90 g/l Solvesso 200, 100 g/l Emulgator 368, 50 g/l Emulgator 1371 A und Restwasser, nach einer 1:3000 Verdünnung mit Wasser, entsprechend 50 ppm Wirkstoffkonzentration und 50 ppm Emulgatorkonzentration, ergab eine durchschnittliche Teilchengrösse von 22 nm nach der Methode der Laserstreulichtkorrelationsspektroskopie. Dies Ergebnis wurde durch noch günstigeres Wirkstoff-Emulgator-Verhältnis von 1:1 erreicht.

Diese Formulierung benötigt wegen des Verzichts auf polares Lösungsmittel, Rühren für längere Zeit, die sich jedoch durch Erhitzen auf ca. 40 °C verkürzen lässt.

Beispiel 7

Eine Formulierung mit folgender Zusammensetzung wurde hergestellt: 50 g/l Flumethrin Wirkstoff, 10 g/l Fenfluthrin Wirkstoff, 14 g/l Solvesso 200, 2,8 g/l Aromasol H, 200 g/l n-Butanol, 160 g/l Emulgator 368, 40 g/l Emulgator 1371 A und Restwasser.

Die Teilchengrösse bei einer Verdünnung von 1:500 war 18 nm.

Beispiel 8

Die 50 + 10 g/l Formulierung von Beispiel 7 zum Sprühen z.B. von Tieren wird z.B. 1:1000 mit Wasser verdünnt, wobei eine Wirkstoffkonzentration von 50 + 10 ppm in der Sprühbrühe erreicht wird. Dagegen braucht man eine höhere Wirkstoffkonzentration z. B. von 2500 + 500 ppm = 2,5 + 0,5 g/l für Giess- oder Pour-on Applikationen.

Solche gebrauchsfertige Pour-on Formulierungen lassen sich aus den erfindungsgemässen Formulierungen herstellen, und zwar ganz einfach durch Zusammenmischung der Komponenten nach folgendem Beispiel:

| | |
|---|---|
| 50 + 10 g/l Formulierung nach Beispiel 7 | 50 ml |
| 1-Oktanol | 80 g |
| Isopropanol | 340 g |
| Wasser | ad 1000 ml |

Diese Formulierung hat eine niedrige Oberflächenspannung von 27 nN/m (Dyn/cm), wodurch gute Benetzung z. B. vom Haarkleid der Tiere erfolgt.

Nach demselben Prinzip ist es möglich, andere gebrauchsfertige Formulierungen z. B. Aerosolsprays herzustellen.

So gelten die erfindungsgemässen Formulierungen auch als Konzentrate zur Herstellung von gebrauchsfertigen Produkten.

Beispiel 9

Dieses Beispiel beschreibt eine Kombinationsformulierung.

| | |
|---|---|
| Flumethrin Wirkstoff | 30 g |
| Cyfluthrin Wirkstoff | 30 g |
| Aromasol H | 8,3 g |
| Solvesso 200 | 8,3 g |
| n-Butanol | 100 g |
| Emulgator SZZ 14 | 150 g |
| Emulgator 1371 A | 40 g |
| Wasser | ad 1000 ml |

Bei einer 1:600 Verdünnung im Wasser wurde eine Teilchengrösse von 5 nm gemessen.

Beispiel 10

Eine 30% G/G oder G/V Formulierung kann nach folgender Zusammensetzung hergestellt werden:

| | |
|---|---|
| Flumethrin Wirkstoff | 300 g |
| Solvesso 200 | 130 g |
| Emulgator 368 | 347 g |
| Emulgator 1371 A | 153 g |
| Wasser | ad 1000 g bzw. 1000 ml |

Eine 1:1000 Verdünnung mit Wasser ergab eine Teilchengrösse von 17 nm und 1:3000 Verdünnung 16 nm.

**Patentansprüche**

1. Wasserlösliche pestizide Formulierungen, bestehend aus 10 bis 500 g/l mindestens eines Pyrethroids, 10 bis 200 g/l eines Gemisches aus aromatischen Kohlenwasserstoffen ($C_{10}$–$C_{13}$) mit Siedepunkten im Bereich von 165°–325 °C, 20 bis 500 g/l mindestens eines nichtionischen Emulgator 5 bis 250 g/l mindestens eines anionischen Emulgators, 0 bis 300 g/l eines Lösungsmittels, dessen Löslichkeit in Wasser bei 20 °C 30 bis ∞ g/l beträgt, 0 bis 5 g/l eines Farbstoffes, 0 bis 50 g/l an Hilfsmitteln und 0 bis 900 g/l Wasser.

2. Wasserlösliche pestizide Formulierung nach Anspruch 1, dadurch gekennzeichnet, dass sie als Pyrethroid
3-[2-(4-Chlorphenyl)-2-chlorvinyl]-2,2-dimethyl-cyclopropancarbonsäure-[α-cyano-4-kolfluor-3-phenoxy)-benzyl]-ester
enthält.

3. Wasserlösliche pestizide Formulierung nach Anspruch 1, dadurch gekennzeichnet, dass die Teilchengrösse der Formulierung nach der Verdünnung mit Wasser unter 40 nm liegt.

4. Wasserlösliche pestizide Formulierung nach Anspruch 1, dadurch gekennzeichnet, dass der nicht-ionische Emulgator ein Alkylarylpolyglykolether der Formel

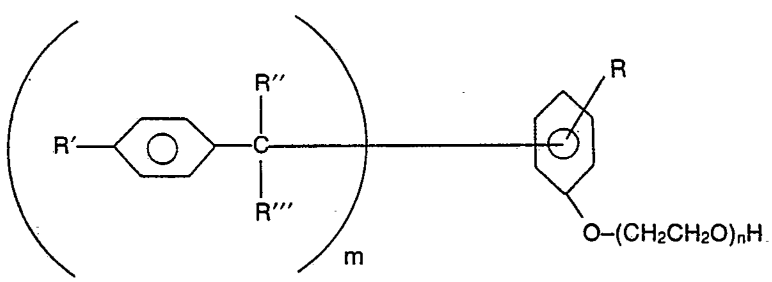

ist,

worin

R für H oder Phenyl steht

R′ für H oder Alkyl mit 1 bis 10 Kohlenstoffatomen steht

R″, R‴ unabhängig voneinander für H, Methyl oder Ethyl stehen

m für ganze oder geteilte Zahlen von 1 bis 3 steht

n für ganze Zahlen von 8 bis 50 steht.

5. Wasserlösliche pestizide Formulierung nach Anspruch 1, dadurch gekennzeichnet, dass der anionische Emulgator ein Salz aus einer Sulfonsäure der Formel $R–C_6H_4–SO_3H$, worin R einen Alkylrest mit 5 bis 30 Kohlenstoffatomen bedeutet, und einer anorganischen oder organischen Base ist.

6. Verfahren zur Herstellung von wasserlöslichen pestiziden Formulierungen gemäss Anspruch 1, die 10 bis 500 g/l eines Pyrethroids enthalten, dadurch gekennzeichnet, dass man das Pyrethroid in Gemischen aromatischer Kohlenwasserstoffe ($C_{10}$–$C_{13}$) mit Siedepunkten im Bereich von 165 °C–325 °C löst, mit 20–500 g/l eines nichtionischen Emulgators, 5–250 g/l eines anionischen Emulgators und gegebenenfalls 0–300 g/l eines in Wasser zu 30 bis ∞ g/l bei 20 °C löslichen Lösungsmittels vermischt, gegebenenfalls Farbstoffe, Hilfsmittel und/oder Wasser zugibt und gegebenenfalls unter Erhitzen zu einer klaren Lösung vermischt.

**Claims**

1. Water-soluble pesticidal formulations consisting of 10 to 500 g/litre of at least one pyrethroid, 10 to 200 g/litre of a mixture of aromatic hydrocarbons ($C_{10}$–$C_{13}$) having boiling points in the range 165°–325 °C, 20 to 500 g/litre of at least one non-ionic emulsifier, 5 to 250 g/litre of at least one anionic emulsifier, 0 to 300 g/litre of a solvent, the solubility of which in water at 20 °C is 30 to ∞ g/litre, 0 to 5 g/litre of a dyestuff, 0 to 50 g/litre of auxiliaries and 0 to 900 g/litre of water.

2. Water-soluble pesticidal formulation according to Claim 1, characterized in that it contains α-cyano-4-fluoro-3-phenoxy)-benzyl 3-[2-(4-chlorophenyl)-2-chlorovinyl]-2,2-dimethylcyclopropanecarboxylate as the pyrethroid.

3. Water-soluble pesticidal formulation according to Claim 1, characterized in that the particle size of the formulation after dilution with water is below 40 nm.

4. Water-soluble pesticidal formulation according to Claim 1, characterized in that the non-ionic emulsifier is an alkylaryl polyglycol ether of the formula

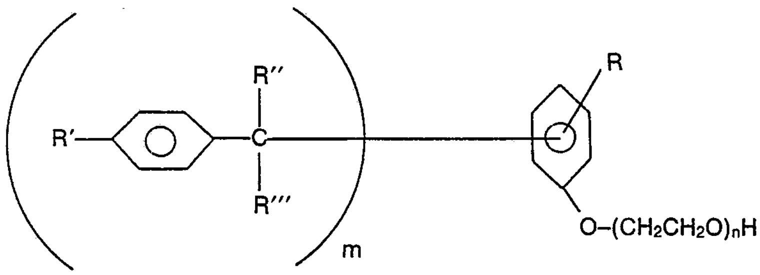

wherein

R stands for H or phenyl,

R′ stands for H or alkyl with 1 to 10 carbon atoms,

R″ and R‴ stands for independently of one another H, methyl or ethyl,

m stands for integers or fractions from 1 to 3

n stands for integers from 8 to 50.

5. Water-soluble pesticidal formulation according to Claim 1, characterized in that the anionic emulsifier is a salt of a sulphonic acid of the formula $R{-}C_6H_4{-}SO_3H$, in which R denotes an alkyl radical having 5 to 30 carbon atoms, and an inorganic or organic base.

6. Process for the preparation of water-soluble pesticidal formulations according to Claim 1, containing 10 to 500 g/litre of a pyrethroid, characterized in that the pyrethroid is dissolved in mixtures of aromatic hydrocarbons ($C_{10}$–$C_{13}$) having boiling points in the range 165 °C–325 °C, the solution is mixed with 20–500 g/litre of a non-ionic emulsifier, 5–250 g/litre of an anionic emulsifier and, if appropriate, 0–300 g/litre of a solvent which is soluble in water to the extent of 30 to ∞ g/litre at 20 °C, if appropriate dyestuffs, auxiliaries and/or water are added and the components are mixed, if necessary with heating, to give a clear solution.

**Revendications**

1. Formulations pesticides hydrosolubles, constituées de 10 à 500 g/l d'au moins un pyréthroïde, de 10 à 200 g/l d'un mélange d'hydrocarbures aromatiques ($C_{10}$–$C_{13}$) avec des points d'ébullition dans l'intervalle de 165 à 325 °C, de 20 à 500 g/l d'au moins un émulsionnant non ionique, de 5 à 250 g/l d'au moins un émulsionnant anionique, de 0 à 300 g/l d'un solvant dont la solubilité dans l'eau à 20 °C va de 30 g/l à l'infini, de 0 à 5 g/l d'un colorant, de 0 à 50 g/l de substances auxiliaires et de 0 à 900 g/l d'eau.

2. Formulation pesticide hydrosoluble suivant la revendication 1, caractérisée en ce qu'elle contient comme pyréthroïde l'ester α-(cyano-4-fluoro-3-phénoxy)-benzylique de l'acide 3-[2-(4-chlorophényl)-2-chlorovinyl]-2,2-diméthylcyclopropanecarboxylique.

3. Formulation pesticide hydrosoluble suivant la revendication 1, caractérisée en ce que le diamètre de ses particules après dilution avec de l'eau est inférieur à 40 nm.

4. Formulation pesticide hydrosoluble suivant la revendication 1, caractérisée en ce que l'émulsionnant non ionique est un éther d'alkylarylpolyglycol de formule

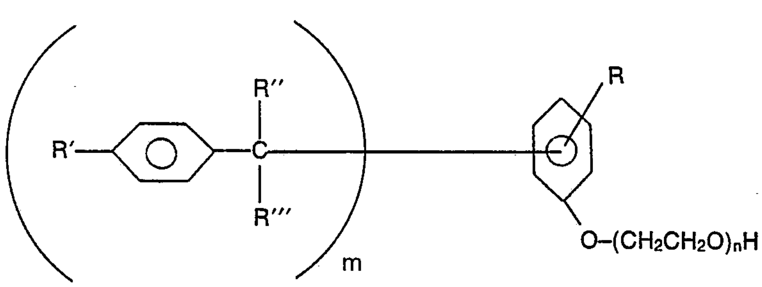

dans laquelle

R représente H ou le groupe phényle,

R′ représente H ou un groupe alkyle ayant 1 à 10 atomes de carbone,

R″, R‴ représentent indépendamment l'un de l'autre H, le groupe méthyle ou le groupe éthyle,

m représente de nombres entiers ou fractionnaires de 1 à 3,

n représente des nombres entiers de 8 à 50.

5. Formulation pesticide hydrosoluble suivant la revendication 1, caractérisée en ce que l'émulsionnant anionique est un sel d'un acide sulfonique de formule $R–C_6H_4–SO_3H$, dans laquelle R est un reste alkyle de 5 à 30 atomes de carbone, et d'une base inorganique ou organique.

6. Procédé de préparation de formulations pesticides hydrosolubles suivant la revendication 1, qui contiennent 10 à 500 g/l d'un pyréthroïde, caractérisé en ce qu'on dissout le pyréthroïde dans des mélanges d'hydrocarbures aromatiques ($C_{10}–C_{13}$) ayant des points d'ébullition dans l'intervalle de 165 à 325 °C, on mélange la solution avec 20–500 g/l d'un émulsionnant non ionique, 5–250 g/l d'un émulsionnant anionique et le cas échéant 0 à 300 g/l d'un solvant soluble dans l'eau à 20 °C dans la proportion de 30 g/l à l'infini, on ajoute des adjuvants et/ou de l'eau et on agite le cas échéant en chauffant jusqu'à l'obtention d'une solution claire.